# DEMANDE DE BREVET EUROPEEN

(11) **EP 0 822 427 A1**
(43) Date de publication de la demande: **04.02.1998**
(21) Numéro de dépôt: 97401755.0
(22) Date de dépôt: 21.07.1997
(51) Int. Cl.: G02B 6/245, G02B 6/44

(54) **Outil de découpe de l'enveloppe tubulaire d'un câble à fibres optiques**

(30) Priorité: 31.07.1996 FR 9609669
(71) Demandeur: FRANCE TELECOM, 75015 Paris (FR)
(72) Inventeur: Caudrelier, Jacques, 45190 Villorceau (FR)
(74) Mandataire: Armengaud Ainé, Alain

(57) **Abrégé**

Cet outil comporte un support (27) pour une lame de coupe (28) attaquant l'enveloppe tubulaire (18) avec une inclinaison donnée et comprend un corps (2) avec un guide fixe (21) et une poulie (6) à profil circulaire, montée à rotation autour d'un axe (7) parallèle au plan de la lame, cette poulie étant disposée pour tourner à l'intérieur du guide en délimitant avec celui-ci un espace dans lequel est introduite l'enveloppe du câble à découper, se disposant dans la gorge (14) de la poulie, ouverte en direction de la lame. L'enveloppe tubulaire s'enroule sur la poulie au cours de son trajet dans le guide, de telle sorte que les fibres contenues dans cette enveloppe, du fait de la courbure prise par celle-ci, se plaquant préférentiellement sur la portion de la surface interne de l'enveloppe appliquée contre le fond (20) de cette gorge, s'éloignent de la surface opposée, attaquée et découpée par la lame.

## Description

La présente invention est relative à un outil permettant d'ouvrir et de découper longitudinalement l'enveloppe tubulaire ou gaine, généralement en matière plastique, notamment en polyéthylène, d'un câble à fibres optiques, en particulier du genre de ceux utilisés dans les réseaux de distribution, afin de pouvoir aisément accéder aux fibres contenues dans cette enveloppe en vue de les extraire pour les disposer dans un boîtier de raccordement où ces fibres sont stockées avant que, individuellement, elles ne soient mises à nu et raccordées par un piquage ou une liaison d'extrémité avec une autre fibre par l'intermédiaire d'une épissure de jonction, cette autre fibre étant le cas échéant réunie à un poste d'utilisation ainsi relié au réseau.

On sait que les câbles de distribution à fibres optiques sont constitués de façon classique d'une enveloppe ou gaine tubulaire de protection, en matière plastique, dans laquelle est répartie une pluralité de fibres optiques parallèles, elles-mêmes individuellement gainées, ces fibres étant libres à l'intérieur de la gaine ou noyées dans un gel de remplissage et d'isolation. Des renforts sont prévus dans l'épaisseur de la gaine, constitués par des fils métalliques ou des mèches composites, les fibres pouvant être réparties dans la gaine autour d'un élément porteur, également métallique, généralement disposé au centre, ces renforts et ce porteur assurant au câble une tenue mécanique convenable et notamment une bonne résistance aux efforts de traction, sans limiter outre mesure sa souplesse à la flexion, du moins dans une limite acceptable pour les fibres optiques elles-mêmes.

Pour pouvoir accéder aux fibres et notamment les extraire ensemble ou isolément de l'enveloppe tubulaire, il est nécessaire de découper celle-ci longitudinalement sur une certaine distance, généralement de l'ordre de 3 à 3,50 m, ceci sans risquer de blesser les fibres contenues dans la gaine et tout spécialement de les sectionner.

On connaît déjà divers outils de découpe, visant à réaliser cet objectif, dont le plus classique agit à la manière d'un rabot, la lame inclinée de celui-ci pénétrant dans l'épaisseur de la gaine sur une profondeur adéquate avant que, le tube étant appliqué contre une portée plane du corps de ce rabot, une traction sur celui-ci ne sectionne une bande de gaine continue, en dégageant ainsi les fibres contenues à l'intérieur.

Mais cet outil classique présente un fort inconvénient, du fait que la profondeur de la coupe réalisée par la lame n'est pas constante, le tube glissant vis-à-vis du rabot sans être maintenu à une distance relative de celui-ci qui reste identique à elle-même sur toute la longueur de découpe souhaitée.

Il en résulte fréquemment que la lame pénètre trop profondément dans la gaine et coupe ou à tout le moins, détériore une ou plusieurs fibres dans l'enveloppe tubulaire formée par celle-ci, en raclant les fibres, la lame ôtant une partie de leur revêtement primaire, rendant ces fibres plus fragiles, surtout en flexion, avec une probabilité de rupture accrue durant les opérations suivantes où ces fibres, extraites du tube, sont lovées dans des cassettes disposées à l'intérieur des boîtiers de raccordement.

Ainsi, on connaît par le document EP-0 328 748, un outil de découpe de la gaine d'un câble sur une grande longueur de celle-ci, cette gaine étant récupérée en vue de son recyclage. L'enveloppe ou gaine est fendue par un couteau, tandis que le guide tubulaire dans lequel passe le contenu du câble, écarte cette enveloppe qui s'enroule sur un tambour de stockage fournissant la traction nécessaire à la coupe de la gaine, sans produire une quelconque fonction de guidage.

Par ailleurs, le document US-A-3 703 035 illustre un système de découpe d'une gaine de câble utilisant une poulie avec une gorge médiane où se loge ce câble, qui est maintenu en position par rapport à une lame qui vient fendre la gaine sur une profondeur appropriée. Cette poulie qui assure principalement le guidage latéral du câble, atténue également son glissement. En revanche, l'appareil décrit ne fait à aucun moment intervenir une courbure accentuée de la gaine lors de la découpe, afin d'éviter d'endommager le revêtement des fibres.

L'invention a pour objet un outil de découpe longitudinale de l'enveloppe tubulaire d'un câble à fibres optiques qui évite ces inconvénients, en permettant d'assurer un contrôle amélioré de la profondeur de la coupe de cette enveloppe, limitant considérablement les risques de détérioration des gaines individuelles de ces fibres, logées dans cette dernière.

A cet effet, l'outil considéré, comportant un support pour une lame de coupe attaquant l'enveloppe tubulaire avec une inclinaison donnée par rapport à la direction longitudinale de celle-ci, pour découper par déplacement relatif de la lame vis-à-vis de l'enveloppe un copeau, en ouvrant l'enveloppe afin d'accéder aux fibres logées dans celle-ci, cet outil comprenant un corps avec une poulie à profil circulaire comportant une gorge en creux, ouverte en direction de la lame, dans laquelle s'enroule l'enveloppe tubulaire, cette poulie étant montée à rotation autour d'un axe parallèle au plan de la lame, se caractérise en ce que la poulie est disposée pour tourner à l'intérieur d'un guide fixe, porté par le corps, en délimitant avec celui-ci un espace dans lequel est introduite l'enveloppe du câble à découper par la lame engagée dans une ouverture de ce guide, de telle sorte que les fibres contenues dans cette enveloppe, du fait de la courbure prise par celle-ci à l'intérieur de la gorge de la poulie au cours de son trajet dans le guide, se plaquant préférentiellement sur la portion de la surface interne de l'enveloppe appliquée contre le fond de cette gorge, s'éloignent de la surface opposée, attaquée et découpée par la lame.

L'outil permet ainsi de plaquer l'enveloppe contre le fond de la gorge et, du fait de la courbure créée par la poulie, d'attirer les fibres vers ce fond, en éliminant le risque de contact de ces fibres avec l'extrémité coupante de la lame au cours du déplacement relatif de l'enveloppe par rapport à celle-ci, et par suite en réduisant dans des proportions tout à fait significatives la possibilité pour la lame de sectionner la gaine individuelle d'une ou de plusieurs de ces fibres et plus encore de couper intempestivement la fibre elle-même.

Ce déplacement des fibres dans l'enveloppe est facilité par la forme de la gorge de la poulie et également par la rotation de celle-ci autour de son axe, cette enveloppe roulant en quelque sorte sur le fond de la gorge, en ne glissant plus sur elle-même comme dans la situation utilisant un rabot classique. Cette disposition permet notamment une limitation des frottements et simultanément une réduction de l'effort de traction nécessaire.

Dans un mode de réalisation préféré, le corps de l'outil est constitué de deux flasques parallèles, enserrant entre eux la poulie et prolongés par deux pièces de guidage de l'enveloppe tubulaire, ces flasques étant symétriques l'un de l'autre par rapport au plan diamétral médian de la poulie.

Selon une autre caractéristique, un jeu est ménagé entre les bords périphériques de la poulie aux extrémités de la gorge et les pièces de guidage, notamment dans la partie de celui-ci disposée en amont de la lame par rapport au sens de déplacement de l'enveloppe dans la gorge.

Avantageusement, ce jeu est de l'ordre de 1 mm, pour les câbles de distribution usuels.

Selon une autre caractéristique également, le support de la lame de coupe comporte un pion de montage sur le corps, parallèle à l'axe de la poulie, de manière à faire varier l'inclinaison de la lame vis-à-vis de l'enveloppe et à permettre le relèvement de celle-ci en cas d'obstacles ou d'irrégularités rencontrées sur l'enveloppe tubulaire.

Selon encore une autre caractéristique, le support de la lame comporte un trou oblong traversé par une vis de fixation sur le support, afin d'ajuster la position de la lame et permettre le réglage de la profondeur de coupe de l'enveloppe tubulaire.

D'autres caractéristiques d'un outil de découpe de l'enveloppe tubulaire d'un câble à fibres optiques, établi conformément à l'invention, apparaîtront encore à travers la description qui suit d'un exemple de réalisation, donné à titre indicatif et non limitatif, en référence aux dessins annexés sur lesquels :
- La Figure 1 est une vue schématique en coupe transversale partielle de l'outil considéré et de l'enveloppe tubulaire d'un câble montée dans cet outil.
- La Figure 2 est une vue en coupe de la Figure 1 selon la ligne II-II de cette dernière.
- La Figure 3 est une vue encore plus schématique, analogue à la Figure 1 mais à plus faible échelle, illustrant le montage de la poulie de l'outil et la mise en position du câble dans le guide de celui-ci.
- La Figure 4 est une vue analogue à la Figure 3, explicitant la manière dont est mis en oeuvre l'outil pour assurer la coupe de l'enveloppe tubulaire du câble.

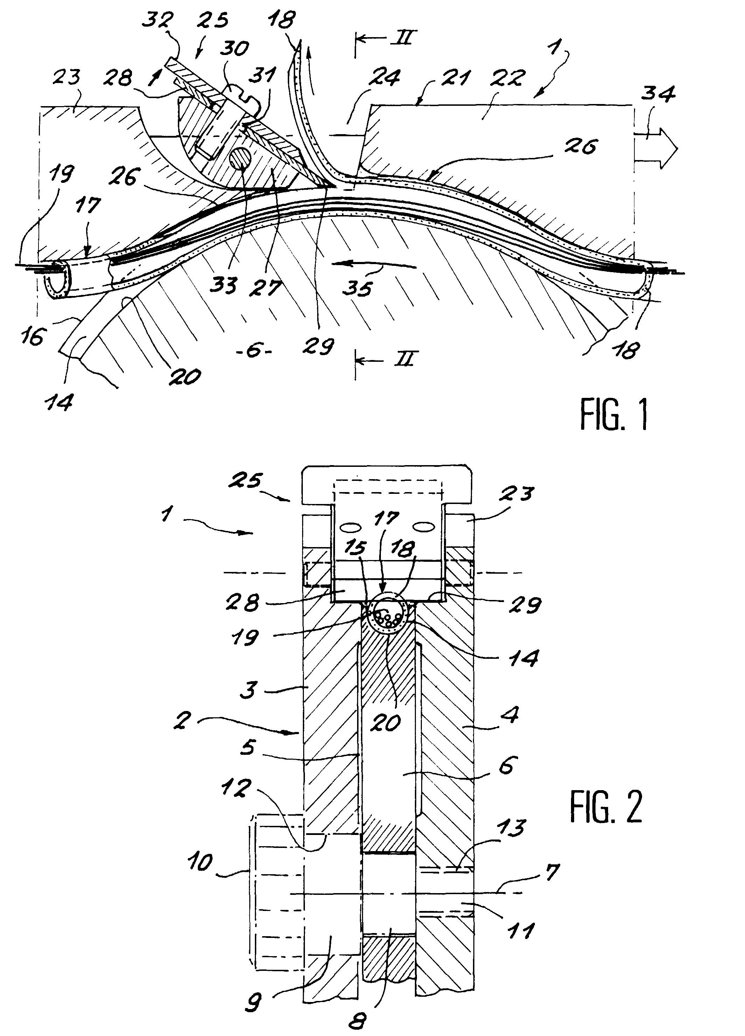

Sur les Figures 1 et 2, la référence 1 désigne, dans son ensemble, l'outil selon l'invention, dont une partie seulement est représentée sur ces figures, cet outil comportant un corps 2 constitué de deux flasques parallèles, respectivement 3 et 4, symétriques l'un de l'autre et délimitant entre eux un espace interne 5 à l'intérieur duquel est logée une poulie plate 6 à contour circulaire, dont le plan diamétral médian définit le plan de symétrie des deux flasques.

La poulie est montée à rotation dans le corps 2 autour d'un axe 7 défini par le moyeu 8 d'un doigt épaulé 9, lequel comporte une tête de commande 10 et une extrémité filetée 11. Le doigt 9 est prévu pour s'engager dans un alésage 12 du premier flasque 3, le second flasque 4 comportant un alésage taraudé 13, permettant d'y visser l'extrémité filetée 11, en immobilisant les deux flasques l'un par rapport à l'autre, tout en permettant à la poulie 6 de pivoter librement en tournant sur le moyeu 8.

La poulie 6 comporte à sa périphérie une gorge ouverte 14 dont la section, vue en coupe comme illustré sur la Figure 2, a un profil concave délimité à ses extrémités par des bords effilés 15 et 16 délimitant la gorge 14.

La gorge 14 de la poulie 6 est ainsi aménagée pour permettre d'y disposer, un câble à fibres optiques 17, lequel comporte de façon en elle-même bien connue dans la technique une enveloppe tubulaire de protection 18, continue, en matière plastique, généralement en polyéthylène et, à l'intérieur de cette enveloppe une pluralité de fibres optiques 19, chacune de ces fibres comprenant elle-même une gaine individuelle entourant un coeur en silice.

Les fibres 19 sont libres à l'intérieur de l'enveloppe tubulaire 18 du câble 17 et se répartissent dans l'espace qui leur est ainsi offert en se disposant sensiblement parallèlement les unes aux autres, avec la faculté de subir, dans l'enveloppe un éventuel léger déplacement, notamment pour accommoder les flexions auxquelles le câble est soumis lors de son utilisation. Le cas échéant, les fibres 19 sont noyées à l'intérieur de l'enveloppe 18 dans un gel de pétrole ou analogue, d'isolation et de protection.

Le câble 17, mis en place à l'intérieur de la gorge 14 de la poulie 6, épouse le profil circulaire de cette gorge sur un secteur périphérique approprié de celle-ci, ce câble étant mis en place et appliqué contre le fond 20 de cette gorge, grâce à un guide fixe 21, prolongeant les flasques 3 et 4 en faisant partie du corps 2 de l'outil, ce guide étant constitué au moyen de deux pièces, respectivement 22 et 23, convenablement profilées et délimitant entre elles un espace 24 pour le montage dans celui-ci d'un ensemble 25 permettant d'assurer la coupe de l'enveloppe tubulaire 18 de la manière décrite ci-après.

La pièce 22 qui est disposé en amont de l'ensemble de découpe (25) par rapport au sens de déplacement de l'enveloppe tubulaire (18) de la manière définie ci-après, est prévue pour laisser libre entre elle et l'enveloppe 18, un faible jeu 26, de l'ordre de 1 mm au plus, permettant d'éviter que le câble 17 ne se bloque entre la poulie et le guide et puisse au contraire subir par rapport au corps 2 de l'outil un mouvement relatif sans blocage, consécutivement à la rotation de la poulie 6. Le cas échéant, un jeu similaire est également prévu entre la seconde pièce 23 et l'enveloppe 18 du câble 17, en aval de l'ensemble de découpe 25.

L'ensemble de découpe 25 comporte un support 27 pour une lame plate 28, s'étendant dans un plan parallèle à l'axe 7 de la poulie 6, cette lame ayant une extrémité 29 rendue coupante par une taille en biseau et qui est amenée au contact de la gaine 18 du câble 17, de manière à pénétrer dans cette dernière sur une profondeur donnée qui peut être ajustée grâce à un positionnement adéquat de la lame 28 vis-à-vis du corps 27, au moyen d'une vis de blocage 30 traversant un trou oblong 31 ménagé dans la lame pour autoriser son déplacement relatif, avant d'être plaquée et immobilisée sur le support par une contre-plaque 32.
Le support 27 est articulé sur le corps 2 dans l'espace 24 autour d'un pion transversal 33, dont l'axe est parallèle à celui du moyeu 8 de la poulie.

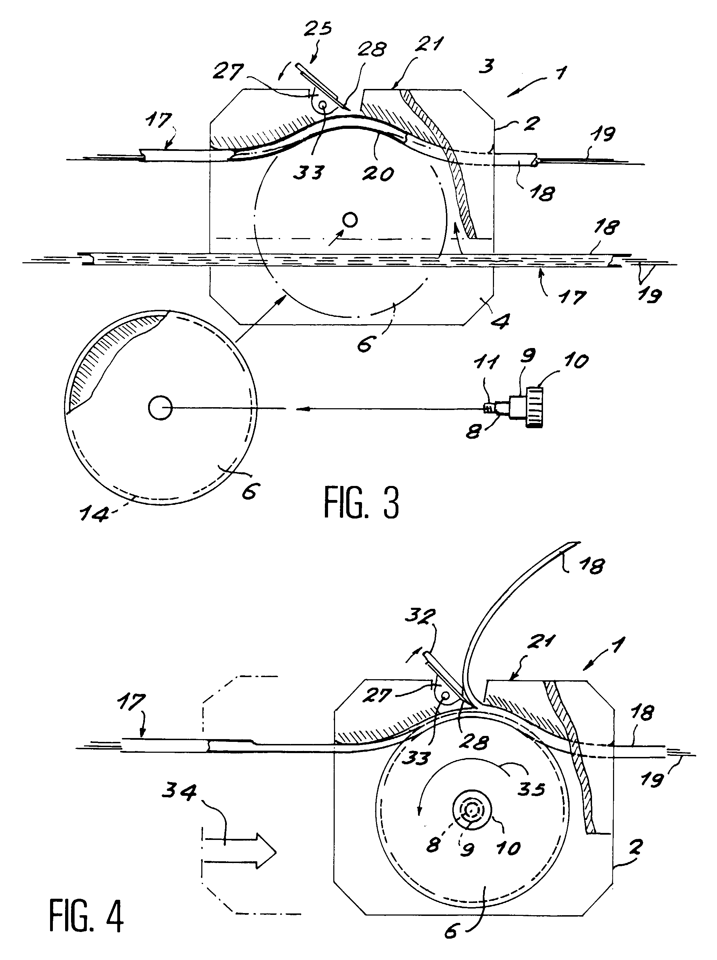

Les Figures 3 et 4 permettent d'illustrer comment s'effectue le montage du câble 17 à l'intérieur du corps 2 de l'outil 1, ce câble étant mis en place dans la gorge 14 de la poulie 6 et cette dernière montée entre les flasques 3 et 4, d'abord en étant disposée contre le premier de ces flasques en appliquant l'enveloppe sous les pièces du guide 21 avant que le second flasque ne soit à son tour immobilisé vis-à-vis du premier par le doigt épaulé 9.

Dans cette position, la lame de coupe 28 est ajustée en position sur son support 27 de manière à pénétrer sur une profondeur convenable dans l'enveloppe 18, la découpe d'un copeau longitudinale de cette dernière pouvant ensuite être réalisée en effectuant un déplacement relatif du câble par rapport à l'outil, schématisé par la flèche 34 sur les Figures 1 et 4.

Au cours de ce mouvement, la poulie 6, libre en rotation autour de son axe 7, est entraînée selon le sens de la flèche 35, en permettant au câble de rouler en quelque sorte contre le fond 20 de la gorge 14 de cette poulie, au fur et à mesure que se forme le copeau découpé dans l'enveloppe 18.

Grâce à la courbure du câble assurée par son engagement dans la gorge 14 sur un secteur circulaire de la poulie 6, entre celle-ciet le guide fixe 21, on comprend, comme illustré sur la Figure 1, que les fibres 19, qui sont librement réparties dans l'enveloppe 18, vont venir se plaquer contre la surface de celle-ci, elle-même en contact le fond 20 de la gorge, en les éloignant au maximum de l'arête de coupe 29 de la lame 28, de telle sorte que le risque que cette dernière puisse sectionner une de ces fibres, voire même détruire ou endommager la gaine individuelle de celles-ci, est pratiquement entièrement éliminé, du moment que la profondeur de la coupe réglée par le positionnement de la lame 28 sur son support 27 est convenablement déterminé.

La liaison du support 27 avec le corps 2 de l'outil 1 par l'intermédiaire du pion 33 procure par ailleurs l'avantage d'un montage "flottant" de la lame 28 qui peut ainsi se relever librement et en particulier éviter le sectionnement accidentel d'une ou plusieurs fibres 19 dans l'enveloppe 18, lorsque celle-ci présente des irrégularités dans sa surface, résultant le plus souvent de reliquats de colle ou autre. Ce montage flottant de l'ensemble de coupe 25 permet en revanche d'obtenir un copeau d'épaisseur déterminée, se maintenant égale à elle-même sur toute la longueur de la découpe effectuée.

On réalise ainsi un outil de coupe de conception très simple et qui présente une grande sûreté à l'égard des fibres contenues dans l'enveloppe tubulaire du câble, cet outil étant peu coûteux et pouvant être utilisé sans nécessiter une quelconque technicité de la part de l'usager.

Bien entendu, il va de soi que l'invention ne se limite pas à l'exemple de réalisation plus spécialement décrit ci-dessus en référence aux dessins annexés ; elle en embrasse au contraire toutes les variantes.

## Revendications

1. Outil de découpe de l'enveloppe tubulaire (18) d'un câble (17) à fibres optiques (19), comportant un support (27) pour une lame de coupe (28) attaquant l'enveloppe tubulaire avec une inclinaison donnée par rapport à la direction longitudinale de celle-ci, pour découper par déplacement relatif de la lame vis-à-vis de l'enveloppe un copeau, en ouvrant l'enveloppe afin d'accéder aux fibres logées dans celle-ci, cet outil comprenant un corps (2) avec une poulie (6) à profil circulaire comportant une gorge en creux (14), ouverte en direction de la lame, dans laquelle s'enroule l'enveloppe tubulaire, cette poulie étant montée à rotation autour d'un axe (7) parallèle au plan de la lame, caractérisé en ce que la poulie est disposée pour tourner à l'intérieur d'un guide fixe (21), porté par le corps, en délimitant avec celui-ci un espace dans lequel est introduite l'enveloppe du câble à découper par la lame engagée dans une ouverture (24) de ce guide, de telle sorte que les fibres contenues dans cette enveloppe, du fait de la courbure prise par celle-ci à l'intérieur de la gorge de la poulie au cours de son trajet dans le guide, se plaquant préférentiellement sur la portion de la surface interne de l'enveloppe appliquée contre le fond (20) de cette gorge, s'éloignent de la surface opposée, attaquée et découpée par la lame.

2. Outil de découpe selon la revendication 1, caractérisé en ce que le corps (2) de l'outil est constitué de deux flasques parallèles (3, 4), enserrant entre eux la poulie (6) et prolongés par deux pièces de guidage (22, 23) de l'enveloppe tubulaire (18), ces flasques étant symétriques l'un de l'autre par rapport au plan diamétral médian de la poulie.

3. Outil de découpe selon la revendication 2, caractérisé en ce qu'un jeu (26) est ménagé entre les bords périphériques de la poulie (6) aux extrémités de la gorge (14) et les pièces de guidage (22, 23), notamment dans la partie du guide (21) disposée en amont de la lame (28) par rapport au sens de déplacement de l'enveloppe dans la gorge.

4. Outil de découpe selon la revendication 3, caractérisé en ce que le jeu (26) est de l'ordre de 1 mm.

5. Outil de découpe selon l'une quelconque des revendications 1 à 4, caractérisé en ce que le support (27) de la lame de coupe (28) comporte un pion (33) de montage sur le corps (2), parallèle à l'axe de la poulie.

6. Outil de découpe selon l'une quelconque des revendications 1 à 5, caractérisé en ce que le support (27) de la lame de coupe (28) comporte un trou oblong (31) traversé par une vis (30) de fixation sur le support, afin d'ajuster la position de la lame et permettre le réglage de la profondeur de coupe de l'enveloppe tubulaire.
